# EUROPÄISCHE PATENTANMELDUNG

(11) **EP 0 663 173 A1**
(43) Veröffentlichungstag der Anmeldung: **19.07.1995**
(21) Anmeldenummer: 94120660.9
(22) Anmeldetag: 24.12.1994
(51) Int. Cl.: A47J 37/12

(54) **Einbaugerät**

(30) Priorität: 13.01.1994 DE 4400671
(71) Anmelder: GEBRUEDER THIELMANN AG Kommanditgesellschaft, D-35708 Haiger-Sechshelden (DE)
(72) Erfinder: Reitz, Jürgen, D-35713 Eschenburg (DE)
(74) Vertreter: Gesthuysen, von Rohr & Weidener

(57) **Zusammenfassung**

Die Erfindung betrifft ein Einbaugerät zur Anordnung in einer Geräteausnehmung (2) einer Arbeitsplatte (3) eines Küchenmöbels oder einer Küchenzeile, insbesondere ein Fritiereinbaugerät (1) mit einem innerhalb eines Fritiertopfes (6) befindlichen Fritierraum (7). Um die Einsatzmöglichkeiten eines an sich ortsfesten Einbaugerätes zu erhöhen, ist erfindungsgemäß vorgesehen, daß das Einbaugerät derart ausgebildet ist, daß es vom Benutzer aus der Geräteausnehmung (2) herausgenommen und als Tischgerät verwendet werden kann.

## Beschreibung

Die Erfindung betrifft ein Einbaugerät zur Anordnung in einer Geräteausnehmung einer Arbeitsplatte eines Küchenmöbels oder einer Küchenzeile, insbesondere Fritiereinbaugerät mit einem innerhalb eines Fritiertopfes befindlichen Fritierraum sowie ein Küchenmöbel oder eine Küchenzeile mit einem derartigen Einbaugerät.

Ein Einbaugerät und insbesondere ein Fritiereinbaugerät der eingangs genannten Art ist wie ein Küchenmöbel mit einem derartigen Einbaugerät bereits seit langem bekannt. Hierzu wird beispielsweise auf den "Einbaugeräte-Katalog" der Firma Neff, Seiten 30 und 31 hingewiesen. Das bekannte Fritiereinbaugerät besteht im wesentlichen aus Edelstahl und hat einen aus Edelstahl bestehenden Fritierttopf, der aber auch emailliert sein kann. Der Betrieb des Fritiereinbaugerätes wird über eine Kontrollampe angezeigt. Bei dem Heizkörper handelt es sich um ein in den Fritiertopf hinein- und herausschwenkbares Heizelement, vorzugsweise mit einer Leistung von 2 kW. Die Temperatur kann über einen Thermostatschalter von 0 bis maximal 200 Grad eingestellt werden. Das zu fritierende Gut wird in der Regel in einen beispielsweise vernickelten Drahtkorb mit versenkbarem Griff fritiert. Der Fritiertopf kann mit einem emaillierten oder aus Edelstahl bestehenden Deckel abgedeckt werden. Zum Reinigen ist am Boden des Fritiertopfes eine Öffnung vorgesehen, die mit einer Ablaßleitung verbunden ist. Die Ablaßleitung endet in der Regel in einem Ölablaufventil oder Ölablaßhahn.

Fritiereinbaugeräte als Teil einer Küchenzeile haben sich in privaten Haushalten und gewerblich betriebenen Küchen bewährt. Nachteilig an den bekannten Fritiereinbaugeräten ist es, daß die Reinigung recht aufwendig ist, da nicht nur der Fritiertopf an sich, sondern auch das zu diesem Zweck herausgeschwenkte Heizelement gereinigt werden muß. Außerdem stellt das Ölablaufventil bzw. der Ölablaßhahn einen ständigen Störfaktor dar. Entweder ist der Ölablaßhahn an der Küchenzeilenfront angeordnet, was als ästhetisch besonders nachteilig empfunden wird, oder aber im Innenraum des betreffenden Küchenmöbels, wobei dann die Handhabung umständlich ist. Außerdem besteht über dem grundsätzlich in einfacher Art und Weise zu öffnenden Ölablaßhahn die Gefahr, daß Kinder diesen während des Betriebes öffnen und sich verbrennen.

Ein weiterer wesentlicher Nachteil von insbesondere in privaten Küchen verwendeten Fritiereinbaugeräten aber auch sonstigen Einbaugeräten besteht darin, daß ihre Einsatzmöglichkeiten relativ begrenzt sind. Die Zubereitung bzw. das Fritieren einer Speise kann lediglich in der Küche erfolgen. Häufig ist jedoch eine Zubereitung am Tisch zweckmäßig und erwünscht. Da die bekannten Einbaugeräte jedoch ortsfest im Küchenmöbel bzw. der Küchenzeile montiert sind, kommt eine Zubereitung am Eßtisch nicht in Frage.

Eine derartige Zubereitung ist lediglich über sogenannte Tisch-Fritiergeräte möglich. Hierbei handelt es sich um Haushaltsgeräte, die nicht ortsgebunden sind. Diese Geräte gehören allerdings nicht zu einer Küchenzeile bzw. sind in diese integrierbar, nehmen in der Küche relativ viel Platz weg und werden häufig auch als ästhetisch nicht sonderlich ansprechend innerhalb der Küche empfunden.

Zur Vermeidung der vorgenannten Nachteile existieren in vielen Haushalten ein Fritiereinbaugerät als Teil einer Küchenzeile, also in diese integriert und ein Tisch-Fritiergerät für Fälle, in denen eine externe Zubereitung, beispielsweise am Eßtisch gewünscht.

Die Erfindung geht nun einen neuen Weg, dessen Grundgedanke im Patentanspruch 1 angegeben ist. Erfindungsgemäß ist das eingangs genannte Einbaugerät derart ausgebildet, daß es dazu geeignet und vorgesehen ist, vom Benutzer aus der Geräteausnehmung herausgenommen und als Tischgerät verwendet zu werden. Durch die Erfindung werden die sich bei Einbaugeräten einerseits und Tischgeräten andererseits ergebenden Vorteile in einem einzigen Gerät vereinigt. Das erfindungsgemäße Einbaugerät läßt sich in der Arbeitsplatte versenken und ist in eine Küchenzeile integriert. Das erfindungsgemäße Einbaugerät wirkt daher in einer Küchenzeile ästhetisch ansprechend und nicht als Fremdkörper. Außerdem kann das erfindungsgemäße Einbaugerät an jedem beliebigen Ort eingesetzt werden, so daß man bei der Zubereitung der Speise nicht mehr an die Küche bzw. die Küchenzeile gebunden ist.

Weitere Merkmale, Vorteile und Anwendungsmöglichkeiten der vorliegenden Erfindung ergeben sich aus den Unteransprüchen, der nachfolgenden Beschreibung von Ausführungsbeispielen anhand der Zeichnung und der Zeichnung selbst. Dabei bilden alle beschriebenen und/oder bildlich dargestellten Merkmale für sich oder beliebiger sinnvoller Kombination den Gegenstand der vorliegenden Erfindung, unabhängig von ihrer Zusammenfassung in den Ansprüchen oder deren Rückbeziehung. Es zeigt
- Fig. 1: eine Seitenquerschnittsansicht eines in eine Geräteausnehmung einer Arbeitsplatte eines Küchenmöbels eingesetzten Fritiereinbaugerätes und
- Fig. 2: eine Querschnittsansicht entlang der Schnittlinie II-II aus Fig. 1.

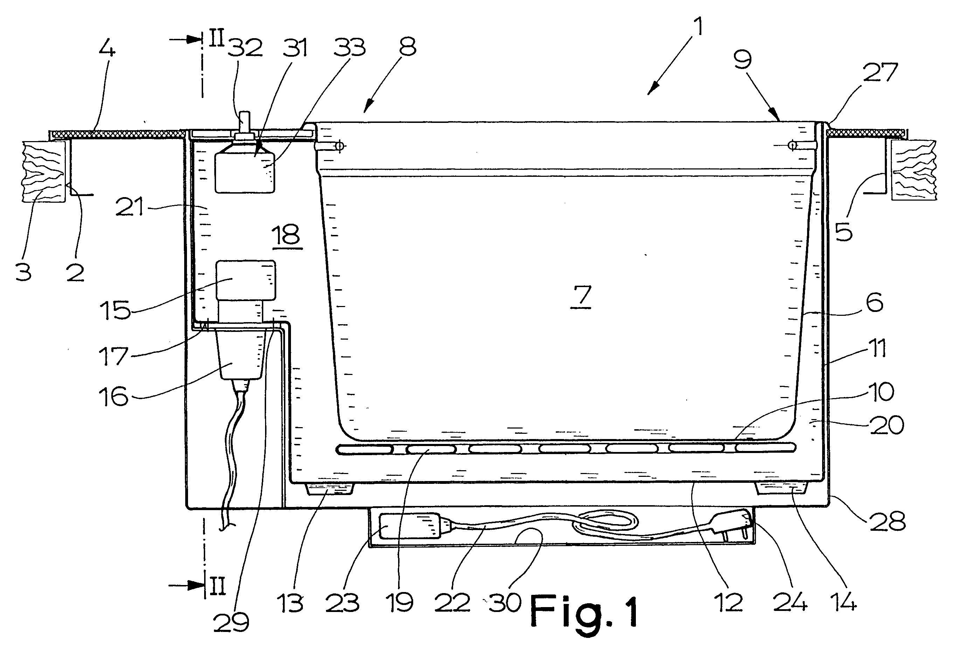

In Fig. 1 ist ein Fritiereinbaugerät 1 dargestellt, das in einer Geräteausnehmung 2 einer Arbeitsplatte 3 angeordnet ist. Die Arbeitsplatte 3 gehört zu einem Küchenmöbel bzw. einer Küchenzeile vorzugsweise in einem Privathaushalt. Es versteht sich jedoch, daß die Erfindung nicht auf Fritiereinbaugeräte in Privathaushalten beschränkt ist. Durch die Erfindung werden insbesondere auch andere Einbaugeräte als Fritiereinbaugeräte, beispielsweise Herdplatten, erfaßt. Im folgenden wird jedoch lediglich auf Fritiereinbaugeräte eingegangen.

Zur Klarstellung sei außerdem darauf hingewiesen, daß unter Geräteausnehmung 2 der gesamte Ausschnitt in der Arbeitsplatte 3 zu verstehen ist. Dabei ist es gleichgültig, ob sich das Fritiereinbaugerät 1 unmittelbar an der Arbeitsplatte 3, an einer Glaskeramikplatte 4 oder einem anderen Bauteil abstützt in der bzw. den eine entsprechende für das Fritiereinbaugerät 1 vorgesehene Öffnung ausgebildet ist. Im dargestellten Ausführungsbei spiel ist in die Geräteausnehmung 2 ein vorzugsweise umlaufender Rahmen 5 eingesetzt, der sich auf der Oberseite der Arbeitsplatte 3 abstützt. In diesen Rahmen wiederum ist die Glaskeramikplatte 4 eingesetzt, die eine Öffnung aufweist, in die das Fritiereinbaugerät 1 eingesetzt ist. Das Fritiereinbaugerät 1 stützt sich an der Glaskeramikplatte 4 und somit mittelbar an der Arbeitsplatte 3 ab.

Erfindungsgemäß ist nun vorgesehen, daß das Fritiereinbaugerät 1 dazu geeignet und vorgesehen ist, vom Benutzer aus der Geräteausnehmung 2 herausgehoben und als Tischgerät, also extern, verwendet zu werden. In dieser Erfindungsidee liegt ein wesentlicher Unterschied zu bekannten Fritiereinbaugeräten, die, einmal montiert, nur mit Hilfe bestimmter Spezialwerkzeuge wieder ausgebaut werden können. Da bei einem derartigen Ausbau die vorhandenen elektrischen Anschlüsse und Kabel zu Tage treten, wird es allgemein empfohlen, diese Arbeiten von Fachleuten durchführen zu lassen, damit es nicht zu Unfällen beispielsweise beim Lösen der elektrischen Verbindung kommt. In jedem Fall sind die bekannten Fritiereinbaugeräte weder dazu vorgesehen noch dazu geeignet, in der erfindungsgemäß vorgeschlagenen Art und Weise aus der Geräteausnehmung herausgenommen bzw. in diese eingesetzt und als Tischgerät verwendet zu werden.

Da es bei den bekannten Fritiereinbaugeräten aufgrund der möglichen Gefahren bereits an der Eignung fehlt, vom Benutzer wiederholt ausgebaut und als Tischgerät verwendet zu werden, sind auch keine diesbezüglichen Griffe bei den bekannten Fritiereinbaugeräten zum Herausheben aus der Geräteausnehmung vorgesehen. Im Gegensatz hierzu ist bei dem erfindungsgemäßen Fritiergerät 1 eine Griffeinrichtung vorgesehen, die im eingebauten Zustand des Fritiereinbaugerätes 1 von außen her zugänglich ist. Um nicht störend zu wirken bietet es sich an, wenn die Griffeinrichtung innerhalb des Fritierraumes 7 des Fritiertopfes 6 angeordnet ist. Hierzu bietet sich insbesondere der obere Bereich des Fritierraumes 7 an, da dieser Bereich leicht zugänglich und in der Regel wenig fettverschmutzt ist. Außerdem besteht durch die Anordnung im oberen Bereich nicht die Gefahr, daß aufgrund eines ungünstigen Schwerpunktes des Fritiereinbaugerätes dieses beim Herausheben umkippt.

Darüber hinaus ist es zweckmäßig, daß die Griffeinrichtung zwei Griffe 8, 9 aufweist, die vorzugsweise einander gegenüberliegen. Durch diese besondere Anordnung kann auf jeden Fall ein Verkanten des Fritiereinbaugerätes 1 beim Herausheben verhindert und das Herausheben an sich möglichst gleichmäßig realisiert werden. Außerdem sollten die einander gegenüberliegenden Griffe 8, 9 nur geringfügig in den Fritierraum 7 hineinragen, so daß der lichte Querschnitt des Fritiertopfes 6 nicht zu stark verengt wird. Dazu sind die Seitenwände des Fritiertopfes 6 schräg geneigt angeordnet, so daß die Querschnittsfläche des Bodens 10 des Fritiertopfes 6 etwa dem lichten Querschnitt im Bereich der Griffe 8, 9 entspricht. Weder im Boden 10 des Fritiertopfes 6 noch im Bereich des Bodens ist eine Ölablaßöffnung vorgesehen. Da das erfindungsgemäße Fritiereinbaugerät 1 aus der Geräteausnehmung 2 herausnehmbar ist und dies in besonders einfacher Weise über die Griffe 8, 9 erfolgen kann, kann die Reinigung des Fritierraumes 7 und das Entfernen des verbrauchten Fritierfettes in besonders einfacher Weise durch Ausschütten erfolgen. Die mit einem Ölablaßhahn verbundenen Nachteile der bekannten Fritiereinbaugeräte treten bei der Erfindung nicht auf. Außerdem sind die Übergänge der Seitenwände des Fritiertopfes 6 zum Boden 10 abgerundet, so daß eine Reinigung in besonders einfacher Weise möglich ist.

Damit das erfindungsgemäße Fritiereinbaugerät gefahrlos als Tischgerät verwendet werden kann, ist ein den Fritiertopf 6 im wesentlichen umgebendes Gehäuse 11 vorgesehen. Das Gehäuse 11 kann vorzugsweise aus Edelstahl bestehen oder emailliert sein. Weiter ist das Gehäuse 11 mit einem im wesentlichen ebenen Boden 12 versehen. Unter dem Ausdruck "ebener Boden" ist zu verstehen, daß das erfindungsgemäße Fritiereinbaugerät 1 bei Anordnung auf einer ebenen Fläche keine oder kaum Schrägstellung hat. Dabei braucht das Fritiereinbaugerät 1 bei Verwendung als Tischgerät natürlich nicht unmittelbar auf dem Boden aufzustehen, es auch kann mit Standfüßen 13, 14 versehen sein. Diese Standfüße 13, 14 können beispielsweise aus rutschfestem Material, vorzugsweise aus Gummi oder Kunststoff, bestehen und mit dem Boden 12 verbunden sein. In jedem Fall ist das Gehäuse 11 des Fritiereinbaugerätes 1 im eingesetzten Zustand zumindest im wesentlichen in der Geräteausnehmung 2 versenkt, so daß bei eingesetztem Fritiereinbaugerät letztlich nicht oder nur anhand der Griffeinrichtung erkennbar ist, daß dieses auch als Tischgerät verwendet werden kann.

Von besonderem Vorteil ist die einfache Handhabung beim Herausnehmen des Fritiereinbaugerätes 1 aus der Geräteausnehmung 2. Insgesamt ist das Fritiereinbaugerät 1 derart ausgebildet, daß es beim Herausnehmen aus der Geräteausnehmung 2 elektrisch entkoppelt wird. Dies bedeutet selbstverständlich, daß es im eingesetzten Zustand elektrisch angeschlossen ist. Hierzu ist an der Unterseite des Gehäuses 11 ein Anschlußelement 15 zum elektrischen Anschluß des Fritiereinbaugerätes 1 vorgesehen. Die Anordnung des Anschlußelementes 15 an der Unterseite des Gehäuses 11 ist deshalb besonders vorteilhaft, da durch einfaches Einsetzen des Fritiereinbaugerätes 1 in die Geräteausnehmung 2 ohne zusätzliche Maßnahmen ein elektrischer Anschluß mit einem im Bereich der Geräteausnehmung 2 vorhandenen korrespondierenden Anschlußelement 16 möglich ist. Um auch bei Verwendung als Tischgerät in einfacher Weise einen elektrischen Anschluß zu ermöglichen, weist das Gehäuse 11 wenigstens eine Stufe 17 auf, wobei an der Unterseite der Stufe 17 das Anschlußelement 15 angeordnet ist. Um ein ästhetisch ansprechendes Design des Fritiereinbaugerätes 1 bei Verwendung als Tischgerät zu gewährleisten, ist das Anschlußelement 15 im wesentlichen im Gehäuse 11 aufgenommen. Dies bedeutet, daß das Anschlußelement 15 nicht oder nur geringfügig über die Unterseite der Stufe 17 übersteht.

Im Zwischenraum zwischen dem Gehäuse 11 und dem Fritiertopf 6 befindet sich eine Heizeinrichtung 19. Im dargestellten Ausführungsbeispiel ist die Heizeinrichtung 19 im Bereich des Bodens 12 des Fritiertopfes 6 angeordnet. Um ein zu starkes Erhitzen des Gehäuses 11 zu verhindern, was bei Verwendung als Tischgerät von Nachteil sein kann, ist dem Gehäuse 11 zumindest im Bereich der Heizeinrichtung 19 eine Wärmeisolierung zugeordnet. Selbstverständlich kann auch das gesamte Gehäuse 11 wärmeisoliert sein.

Der Innenraum 18 des Gehäuses 11 ist an sich in zwei Bereiche 20, 21 unterteilt. Der eine Bereich 20 ist zur Aufnahme des Fritiertopfes 6 und der Heizeinrichtung 19 vorgesehen, während der andere Bereich 21 im Bereich der Stufe 17 vorgesehen ist. Dieser Bereich 21 dient zur Aufnahme des Anschlußelementes 22 und der notwendigen und erforderlichen Schalterelektrik und -elektronik.

Um den elektrischen Anschluß des Fritiereinbaugerätes 1 als Tischgerät zu erleichtern, ist diesem eine separate Anschlußschnur 22 zugeordnet. Diese Anschlußschnur 22, bei der es sich um ein an sich handelsübliches Anschlußkabel handeln kann, ist mit einem mit dem Anschlußelement 15 korrespondierenden Anschlußelement 23 an dem einen Ende und an seinem anderen Ende mit einem Stecker 24 zum Einstecken in übliche Steckdosen versehen.

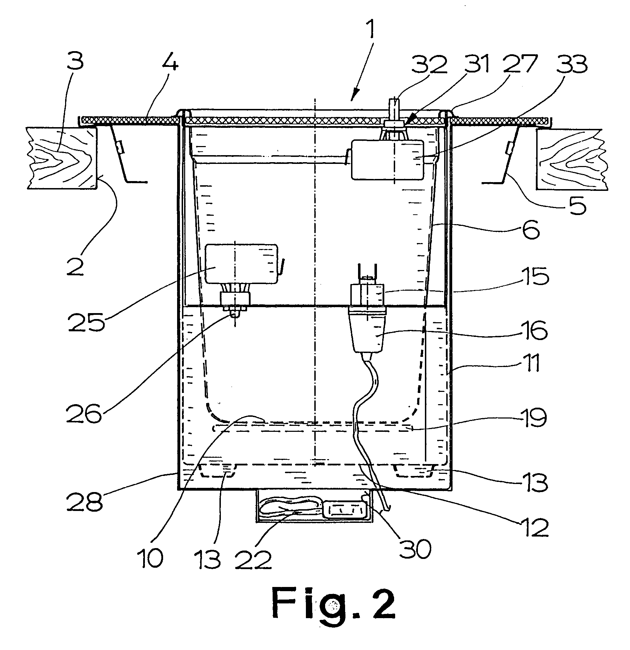

Wie der Fig. 2 zu entnehmen ist, ist das Fritiereinbaugerät 1 mit einem Überhitzungsschutzschalter 25 versehen, der, vorzugsweise, am Gehäuse 11 und insbesondere an der Unterseite des Gehäuses 11 vorgesehen ist. Der Überhitzungsschutzschalter 25 wird aktiviert, wenn eine bestimmte Temperatur der Heizeinrichtung 19 und/oder des zu erhitzenden Öls und/oder im Innenraum 18 und/oder am Gehäuse 11 überschritten wird. Bei Aktivierung des Überhitzungsschutzschalters 25 wird der Stromkreis im Fritiereinbaugerät 1 unterbrochen, das Fritiereinbaugerät 1 also abgeschaltet. Erst durch manuelle Betätigung des Überhitzungsschutzschalters 25 wird der Stromkreis wieder geschlossen. Wenn der Überhitzungsschutzschalter 25 im eingebauten Zustand des Fritiereinbaugerätes 1 aktiviert worden ist, muß dieses aus der Geräteausnehmung 2 herausgenommen werden, um den Überhitzungsschutzschalter 25 zu deaktivieren. Ist der Überhitzungsschutzschalter 25 als einfacher Schalter mit Drucktaste 26 ausgebildet, muß diese wieder eingedrückt werden, um den Stromkreis zu schließen.

Wie bereits eingangs erwähnt, spielt es für die Erfindung keine Rolle, ob sich das Fritiereinbaugerät 1 unmittelbar an der Arbeitsplatte 3 abstützt oder aber die Abstützung beispielsweise über eine Glaskeramikplatte 4 erfolgt, die sich wiederum auf der Arbeitsplatte 3 abstützt. In jedem Fall ist aber ein Abstützungsmittel am Fritiereinbaugerät 1 erforderlich. Hierzu ist das Fritiereinbaugerät 1 in seinem oberen Bereich mit einem vorzugsweise umlaufenden Abstützrand 27 zur Abstützung versehen.

Es versteht sich, daß eine besondere Ausbildung der Geräteausnehmung 2 an das erfindungsgemäße Fritiereinbaugerät 1 von besonderem Vorteil ist. Damit im Küchenmöbel bzw. der Küchenzeile kein nach unten hin offenes "Loch" entsteht, wenn das Fritiereinbaugerät 1 aus der Geräteausnehmung 2 herausgenommen worden ist, bietet es sich besonders an, daß ein im wesentlichen den Abmaßen des Gehäuses 11 entsprechender Einsatz 28 vorgesehen ist, in den das Gehäuse 11 einsetzbar ist. Dieser Einsatz 28, der fest mit der Arbeitsplatte 3 verbunden sein kann, dient letztlich auch der Führung des Gehäuses 11 beim Einsetzen des Fritiereinbaugerätes 1 in die Geräteausnehmung 2. Hierzu kann der Einsatz 28 derart ausgebildet sein, daß er eine im wesentlichen spielfreie Zwangsführung für das Fritiereinbaugerät 1 darstellt.

Um die beim Herausnehmen des Fritiereinbaugerätes 1 erwähnte elektrische Entkopplung bzw. die beim Einsetzen des Fritiereinbaugerätes in die Geräteausnehmung 2 sich ergebende elektrische Kopplung in besonders einfacher Weise zu realisieren, ist vorgesehen, daß im Einsatz 28 das zum Anschlußelement 15 des Fritiereinbaugerätes 1 korrespondierende Anschlußelement 16 vorgesehen und derart angeordnet ist, daß das Fritiereinbaugerät 1 nach dem Einsetzen elektrisch angeschlossen ist. Hierzu ist im Einsatz 28 ein zur Stufe 17 des Fritiereinbaugerätes 1 korrespondierender Absatz 29 vorgesehen, auf dessen Oberseite das Anschlußelement 16 angeordnet ist. Dabei spielt es keine Rolle, welches der Anschlußelemente nun als Stecker und welches als sogenannte Dose ausgebildet ist.

Um die Anschlußschnur 22 in besonders einfacher Weise verstauen zu können, ist innerhalb des Einsatzes 28, vorzugsweise am Boden 12, eine Ausnehmung 30 vorgesehen, die zur Aufnahme der Anschlußschnur 22 dient. Der gesamte Einsatz 28 ist zweckmäßigerweise lediglich nach oben hin offen, weist also nach unten hin keine Öffnungen auf, so daß bei herausgenommenem Fritiereinbaugerät 1 unbeabsichtigt in den Einsatz 28 hineinfallende Gegenstände, wie Messer, Gabeln od. dgl. nicht in der Geräteausnehmung 2 bzw. im Küchenmöbel "verschwinden".

Im übrigen kann es sich anbieten, wenn dem Fritiereinbaugerät ein Energiespeicher beispielsweise in Form eines Akkumulators zugeordnet ist, der während des Betriebs des Fritiereinbaugerätes 1 im eingebauten Zustand Energie speichert und auf diese Art und Weise einen Betrieb als Tischgerät eine Zeitlang ohne besonderen elektrischen Anschluß ermöglicht.

Außerdem sei darauf hingewiesen, daß das erfindungsgemäße Fritiereinbaugerät 1 selbstverständlich mit einem Deckel und einem Fritierkorb, was nicht dargestellt ist, versehen sein kann und im übrigen sämtliche Funktionen und Merkmale wie das eingangs beschriebene Fritiereinbaugerät haben kann. Auch kann in dem Deckel ein Filter vorgesehen sein.

Im übrigen versteht es sich, daß das Anschlußelement 15 über entsprechende elektrische Verbindungen mit dem Überhitzungsschutzschalter 25, einer Schaltereinrichtung 31 und der Heizeinrichtung 19 elektrisch verbunden ist. Auf die genaue elektrische Verbindung dieser Bauteile braucht an dieser Stelle nicht näher eingegangen zu werden. Gleiches gilt für die an sich bekannte Schaltereinrichtung 31. Der guten Ordnung halber sei lediglich darauf hingewiesen, daß diese einen von außen her betätigbaren Drehschalter 32 sowie eine im Innenraum 18 befindliche Schalterelektrik und -elektronik 33 aufweist.

## Patentansprüche

1. Einbaugerät zur Anordnung in einer Geräteausnehmung (2) einer Arbeitsplatte (3) eines Küchenmöbels oder einer Küchenzeile, insbesondere Fritiereinbaugerät (1) mit einem innerhalb eines Fritiertopfes (6) befindlichen Fritierraum (7), **dadurch gekennzeichnet**, daß das Einbaugerät (1) derart ausgebildet ist, daß es vom Benutzer aus der Geräteausnehmung (2) herausnehmbar und als Tischgerät verwendbar ist.

2. Einbaugerät nach Anspruch 1, dadurch gekennzeichnet, daß eine im eingebauten Zustand des Einbaugerätes von außen her zugängliche Griffeinrichtung vorgesehen ist.

3. Einbaugerät nach Anspruch 2, dadurch gekennzeichnet, daß die Griffeinrichtung innerhalb des Fritierraumes (7) vorzugsweise in seinem oberen Bereich angeordnet ist.

4. Einbaugerät nach einem der vorhergehenden Ansprüche, dadurch gekennzeichnet, daß die Griffeinrichtung zwei einander gegenüberliegende Griffe (8, 9) aufweist, die, vorzugsweise, nur geringfügig in den Fritierraum (7) ragen.

5. Einbaugerät nach einem der vorhergehenden Ansprüche, dadurch gekennzeichnet, daß der Fritierraum (7) einen geschlossenen Boden (10) aufweist und nicht mit einer Ölablaßöffnung versehen ist.

6. Einbaugerät nach einem der vorhergehenden Ansprüche, dadurch gekennzeichnet, daß ein das Einbaugerät bzw. den Fritiertopf (6) im wesentlichen umgebendes äußeres Gehäuse (11) vorgesehen ist, das im eingebauten Zustand des Einbaugerätes zumindest im wesentlichen in der Geräteausnehmung (2) versenkt ist.

7. Einbaugerät nach einem der vorhergehenden Ansprüche, dadurch gekennzeichnet, daß an der Unterseite des Gehäuses (11) vorzugsweise aus einem rutschfesten Material bestehende Standfüße (13, 14) vorgesehen sind.

8. Einbaugerät nach einem der vorhergehenden Ansprüche, dadurch gekennzeichnet, daß das Einbaugerät derart ausgebildet ist, daß es beim Herausnehmen aus der Geräteausnehmung (2) elektrisch entkoppelt, beim Einsetzen in die Geräteausnehmung (2) elektrisch gekoppelt wird.

9. Einbaugerät nach einem der vorhergehenden Ansprüche, dadurch gekennzeichnet, daß an der Unterseite des Gehäuses (11) ein Anschlußelement (15) zum elektrischen Anschluß vorgesehen ist.

10. Einbaugerät nach einem der vorhergehenden Ansprüche, dadurch gekennzeichnet, daß das Gehäuse (11) wenigstens eine Stufe (17) aufweist und an der Unterseite der Stufe (17) das Anschlußelement (15) vorgesehen ist und daß, vorzugsweise, das Anschlußelement (15) im wesentlichen im Gehäuse (11) aufgenommen ist.

11. Einbaugerät nach einem der vorhergehenden Ansprüche, dadurch gekennzeichnet, daß eine Heizeinrichtung (19) im Zwischenraum zwischen Gehäuse (11) und Fritiertopf (6), vorzugsweise im Bereich des Bodens (10) des Fritiertopfes (6) vorgesehen ist.

12. Einbaugerät nach einem der vorhergehenden Ansprüche, dadurch gekennzeichnet, daß dem Gehäuse (11) zumindest im Bereich der Heizeinrichtung (19) eine Wärmeisolierung zugeordnet ist.

13. Einbaugerät nach einem der vorhergehenden Ansprüche, dadurch gekennzeichnet, daß der Innenraum (18) des Gehäuses (11) zumindest zwei Bereiche (20, 21) aufweist, wobei ein Bereich (20) zur Aufnahme des Fritiertopfes (6) und der Heizeinrichtung (19) vorgesehen ist, während der andere Bereich (21) im Bereich der Stufe (17) vorgesehen ist und zur Aufnahme des Anschlußelementes (15) und, vorzugsweise, der Schalterelektronik und -elektrik des Einbaugerätes dient.

14. Einbaugerät nach einem der vorhergehenden Ansprüche, dadurch gekennzeichnet, daß dem Einbaugerät eine separate Anschlußschnur (22) mit einem mit dem Anschlußelement (15) korrespondierenden Anschlußelement (23) zugeordnet ist.

15. Einbaugerät nach einem der vorhergehenden Ansprüche, dadurch gekennzeichnet, daß am Fritiereinbaugerät (1) ein Überhitzungsschutzschalter (25) vorgesehen ist, der, vorzugsweise, am Gehäuse (11), insbesondere an der Unterseite des Gehäuses (11) vorgesehen ist.

16. Einbaugerät nach einem der vorhergehenden Ansprüche, dadurch gekennzeichnet, daß das Einbaugerät (1) in seinem oberen Bereich mit einem vorzugsweise umlaufenden Abstützrand (27) zur Abstützung im Bereich der Geräteausnehmung (2) versehen ist.

17. Küchenmöbel oder Küchenzeile mit Arbeitsplatte (3) und einem in einer Geräteausnehmung (2) der Arbeitsplatte (3) anzuordnenden Einbaugerät, insbesondere Fritiereinbaugerät (1), nach einem der vorhergehenden Ansprüche.

18. Küchenmöbel oder Küchenzeile nach Anspruch 17, dadurch gekennzeichnet, daß in der Geräteausnehmung (2) ein im wesentlichen den Abmaßen des Gehäuses (11) entsprechender Einsatz (28) angeordnet ist, in den das Gehäuse (11) einsetzbar ist.

19. Küchenmöbel oder Küchenzeile nach Anspruch 17 oder 18, dadurch gekennzeichnet, daß der Einsatz (28) derart ausgebildet ist, daß er eine im wesentlichen spielfreie Zwangsführung für das Einbaugerät (1) bildet.

20. Küchenmöbel oder Küchenzeile nach einem der Ansprüche 17 bis 19, dadurch gekennzeichnet, daß im Einsatz (28) ein zum Anschlußelement (15) des Einbaugerätes (1) korrespondierendes Anschlußelement (16) vorgesehen und derart angeordnet ist, daß das Einbaugerät nach dem Einsetzen elektrisch angeschlossen ist.

21. Küchenmöbel oder Küchenzeile nach einem der Ansprüche 17 bis 20, dadurch gekennzeichnet, im Einsatz (28) ein zur Stufe (17) des Gehäuses (11) korrespondierender Absatz (29) vorgesehen ist, auf dessen Oberseite das Anschlußelement (16) vorgesehen ist.

22. Küchenmöbel oder Küchenzeile nach einem der Ansprüche 17 bis 21, dadurch gekennzeichnet, daß im Einsatz (28), vorzugsweise am Boden des Einsatzes (28) eine Ausnehmung (30) zur Aufnahme der Anschlußschnur (22) vorgesehen ist.
